# EUROPÄISCHE PATENTSCHRIFT

(11) **EP 3 565 784 B1**
(45) Veröffentlichungstag und Bekanntmachung des Hinweises auf die Patenterteilung: **11.11.2020**
(21) Anmeldenummer: 17822272.5
(22) Anmeldetag: 20.12.2017
(51) Int. Cl.: C01G 23/047, C01G 25/00, C01G 53/00, C01B 13/34, C01F 11/02, C01G 1/02, C01G 9/02, C01G 9/03, B01J 19/26, B01J 4/00, C01G 23/07

(54) **VERFAHREN ZUR HERSTELLUNG METALLOXIDEN MITTELS SPRAYPYROLYSE**
METHOD FOR PRODUCING METAL OXIDES BY MEANS OF SPRAY PYROLYSIS
PROCÉDÉ DE FABRICATION D'OXYDES MÉTALLIQUES AU MOYEN DE PYROLYSE PAR PULVÉRISATION

(30) Priorität: 09.01.2017 EP 17150660
(43) Veröffentlichungstag der Anmeldung: 13.11.2019
(73) Patentinhaber: Evonik Operations GmbH, 45128 Essen (DE)
(72) Erfinder: KRESS, Peter, 63791 Karlstein (DE); KATUSIC, Stipan, 65812 Bad Soden (DE); WIEGAND, Armin, 63538 Grosskrotzenburg (DE); ALFF, Harald, 63796 Kahl (DE); HAGEMANN, Michael, 63796 Kahl (DE)
(74) Vertreter: Evonik Patent Association
(86) Internationale Anmeldenummer: PCT/EP2017/083749
(87) Internationale Veröffentlichungsnummer: WO 2018/127414

(56) Entgegenhaltungen:
- DE-A1-102015 104 653
- LI SHUIQING ET AL: "Flame aerosol synthesis of nanostructured materials and functional devices: Processing, modeling, and diagnostics", PROGRESS IN ENERGY AND COMBUSTION SCIENCE, ELSEVIER SCIENCE PUBLISHERS, AMSTERDAM, NL, Bd. 55, 18. Mai 2016 (2016-05-18), Seiten 1-59, XP029562085, ISSN: 0360-1285, DOI: 10.1016/J.PECS.2016.04.002
- L M Adler ET AL: "Controlled synthesis of nanostructured particles by spray pyrolysis", Aerosol Science, 1. Januar 2002 (2002-01-01), Seiten 369-389, XP055251869, Gefunden im Internet: URL:http://ac.els-cdn.com/S002185020100159 8/1-s2.0-S0021850201001598-main.pdf?_tid=f 40e56a2-d71d-11e5-bc6c-00000aacb362&acdnat =1455896115_fda22f988cb9cddb9e946f03d2221a 5d

## Beschreibung

Die Erfindung betrifft ein Verfahren zur Herstellung Metalloxiden mittels Spraypyrolyse. Spraypyrolyse und Flammenspraypyrolyse sind etablierte Verfahren zur Herstellung von einfachen Metalloxiden bis hin zu komplexen Metallmischoxiden. Bei einer Spraypyrolyse werden Metallverbindungen in Form feiner Tröpfchen in eine Zone hoher Temperatur eingebracht, wo sie oxidiert und/oder hydrolysiert werden und Metalloxide liefern. Eine besondere Form dieses Verfahrens stellt die Flammenspraypyrolyse dar, bei der die Tröpfchen einer Flamme zugeführt werden, die durch Zündung eines Brenngases und eines Sauerstoff enthaltenden Gases gebildet wird.

Dem Fachmann stehen zahlreiche Reaktionsparameter zur Verfügung um die physikalischchemischen Eigenschaften der hergestellten Metalloxide zu variieren. So nehmen Temperatur, Konzentration der Metallverbindung, Verweilzeit und Geschwindigkeit des Reaktionsgemisches Einfluss auf die Umsetzung und die Struktur der Metalloxide.

So führen fehlerhafte Einstellungen oft zu einer unvollständigen Umsetzung des Einsatzmaterials, etwa durch Einschluss des Einsatzmaterials im eigentlich gewünschten Oxid.

In EP-A-2944611 wird ein Verfahren zur Herstellung eines Mischoxides der Zusammensetzung LiₓLa₃Zr₂Al_{y}O_{8,5+0,5x+1,5y} mit 6 ≤ x ≤ 7, 0,2 ≤ y ≤ 0,5 mit einer Granatstruktur beschrieben. Ein wesentlicher Verfahrensschritt hierbei ist eine Flammenspraypyrolyse, bei der man eine die Verbindungen des Lithiums, Lanthans, Aluminiums und des Zirkons enthaltenden Lösung zu feinen Tröpfchen verdüst und in einer Flamme zur Reaktion bringt. Das erhaltene Produkt weist die gewünschte Zusammensetzung auf. Die gewünschte hohe Kristallinität ist jedoch erst durch einen zusätzlichen Temperschritt zu erzielen.

Ähnlich ist die Situation bei der Herstellung von Lithium enthaltenden Mischoxiden. In EP-A-3026019 wird ein Mischoxidpulver der Zusammensetzung Li₁₊ₓ(NiₐCo_{b}Mn_{c})B_{d}O₂, mit 0 < x ≤ 0,2; 0 < a ≤ 1; 0 ≤ b ≤ 1; 0 ≤ c ≤ 1, 0 ≤ d ≤ 0,2 offenbart. Auch bei diesem Verfahren führt eine Flammenspraypyrolyse nicht zu der gewünschten hohen Kristallinität.

In DE 10 2015 104 653 A1 wird ein Sprühpyrolyseverfahren zur Herstellung von oxidischen Nanopartikeln beschrieben, bei dem die Flammenlänge durch Zugabe eines brennenden organischen Peroxids variiert werden kann und so die Partikelgröße gesteuert werden kann.

Aufgabe der vorliegenden Erfindung war es daher ein Verfahren zur Herstellung von Metalloxiden mit einer Flammenspraypyrolyse bereitzustellen, welches Parameter bereitstellt, die es erlauben die Eigenschaften des herzustellenden Metalloxides gezielt einzustellen. Hierunter fallen beispielsweise die vollständige Umsetzung der Einsatzstoffe oder die Einstellung der Kristallinität der Metalloxide.

Gegenstand der Erfindung ist ein Verfahren zur Herstellung eines Metalloxidpulvers mittels Flammenspraypyrolyse, bei dem man
a) einen Strom einer Lösung, welche wenigstens eine oxidierbare oder hydrolysierbare Metallverbindung enthält, mittels eines Zerstäubergases zu einem Aerosol zerstäubt,
b) dieses Aerosol im Reaktionsraum eines Reaktors mit einer Flamme, die durch Zündung eines Gemisches von Brenngas und Luft erhalten wird, zur Reaktion bringt,
c) den Reaktionsstrom kühlt und
d) anschließend das feste Produkt aus dem Reaktionsstrom abtrennt, wobei
e) der Reaktionsraum ein oder mehrere aufeinanderfolgende, doppelwandige Einbauten aufweist, wobei die dem flammenführenden Bereich des Reaktionsraumes zugewandte Wandung des doppelwandigen Einbaus wenigstens einen Schlitz aufweist, durch den man ein Gas oder Dampf in den Reaktionsraum, in dem die Flamme brennt, einbringt, und
f) der Schlitz so angeordnet ist, dass dieses Gas oder der Dampf eine Rotation der Flamme bewirkt.

Die Figuren 1 - 3 zeigen schematisch das erfindungsgemäße Verfahren. Figur 1 zeigt die Anordnung zur Durchführung des Verfahrens mit A = Metall-Lösung; B = Wasserstoff; C = Primärluft; D = Sekundärluft; RxR = Reaktionsraum; FI = Flamme; I - III = Einbauten I -III; S_{I}; _{1 - 4} = Schlitze des Einbaus I, hier 4 Schlitze 1 - 4; stellvertretend für weitere Einbauten; E-I bis E-III = Zugabestelle von Gas/Dampf.

Figur 2 zeigt schematisch einen Einbau mit den Schlitzen 1 - 4 im Längsschnitt entlang der Achse A-B (Figur 2A) und B-A (Figur 2B). Figur 2C zeigt eine Detailansicht bezüglich des Winkels α.

Figur 3 zeigt den Querschnitt durch diesen Einbau mit den Schlitzen 1 - 4 und dem Winkel β.

Figur 4 zeigt schematisch die durch das Einbringen von Gas oder Dampf durch 4 Schlitze hervorgerufene Rotation der Flamme. Die Flamme wird durch die Rotation schmäler und länger im Vergleich zu einem Verfahren nach dem Stand der Technik, welches keine Einbauten gemäß der Erfindung vorsieht.

Unter Einbau oder Einbauten sind im Rahmen der vorliegenden Erfindung immer doppelwandige Einbauten zu verstehen. Reaktionsraum und Einbau sind in der Regel rohrförmig. Der Einbau ist so im Reaktionsraum angebracht, dass seine Außenwand in Kontakt mit der Innenwand des Reaktionsraumes steht. Der Einbau ist oben und unten geschlossen. Sind mehrere Einbauten vorhanden, so können diese beispielsweise bezüglich Länge oder Durchmesser gleich oder verschieden sein. Die aufeinanderfolgenden Einbauten können gleiche oder unterschiedliche Gase führen. Ebenso ist es möglich das einzelne Einbauten keine Gase führen.

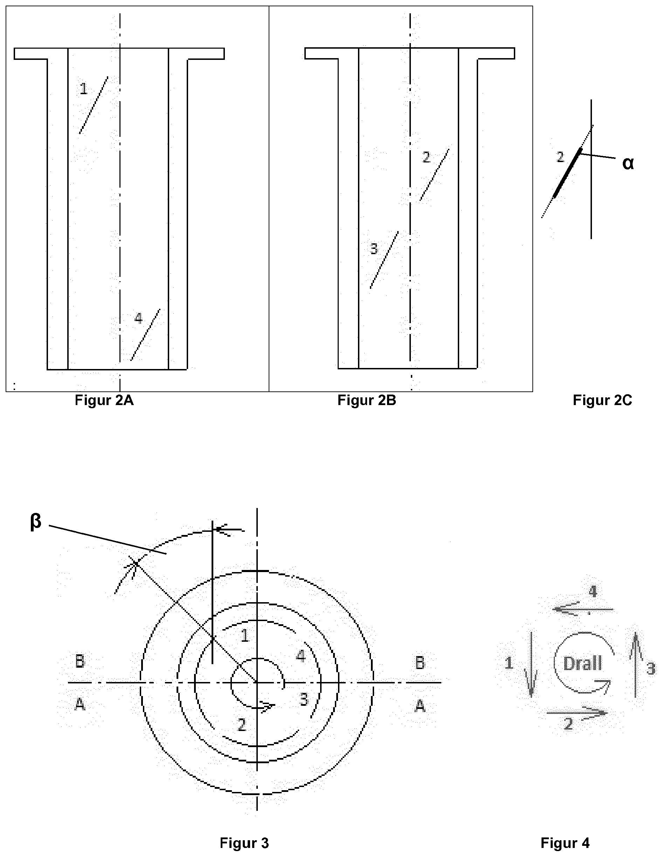

Das erfindungsgemäße Verfahren wird bevorzugt so ausgeführt, dass ein Einbau vier Schlitze aufweist. Betrachtet man den Einbau als rohrförmig, dann sind im Querschnitt die vier Schlitze bevorzugt so angeordnet, dass sich in jedem Quadranten ein Schlitz befindet. Dies ist in der Figur 3 dargestellt.

Gewöhnlich beträgt die Länge eines Schlitzes 50 - 100 mm, dessen Breite 0,5 - 3 mm und das Verhältnis Schlitzlänge/Schlitzbreite 10:1 - 200:1 ist.

Der Winkel α den ein Schlitz zur Senkrechten einnimmt beträgt bevorzugt 15° ≤ α ≤ 60° und besonders bevorzugt 25° ≤ α ≤ 40°.

Verfahren nach den Ansprüchen 1 bis 5, dadurch gekennzeichnet, dass der Winkel β, der den Winkel zwischen der Schnittachse des Schlitzes zum Kreislot des Mittelpunktes beschreibt, bevorzugt 30° ≤ β ≤ 60° und besonders bevorzugt 40° ≤ β ≤ 50° beträgt.

Ein weiteres Merkmal mit dem die Flamme variiert werden kann ist das Verhältnis Durchmesser des Reaktionsraumes zur Gesamtschlitzfläche. Dieses Verhältnis ist bevorzugt 15:1 - 200:1 und besonders bevorzugt 25:1 - 50:1.

Das über einen Schlitz eines Einbaus zugeführte Gas kann ein Brenngas sein. Beispiele für Brenngase sind Wasserstoff, Methan, Ethan, Erdgas und/oder Kohlenmonoxid. Besonders bevorzugt wird Wasserstoff eingesetzt. Ein Brenngas wird insbesondere bei Ausführungsformen eingesetzt, bei denen eine hohe Kristallinität der herzustellenden Metalloxide gewünscht ist, wie zum Beispiel bei Lithium-Mischoxiden für die Verwendung in Lithiumionenbatterien.

Das über einen Schlitz eines Einbaus zugeführte Gas kann ein Sauerstoff enthaltendes Gas sein. In der Regel ist dies Luft oder mit Sauerstoff angereicherte Luft. Ein Sauerstoff enthaltendes Gas wird insbesondere bei Ausführungsformen eingesetzt, bei denen beispielsweise eine hohe BET-Oberfläche des herzustellenden Metalloxides gewünscht ist.

In der Regel ist das über einen Schlitz eines Einbaus zugeführte Brenngas oder Sauerstoff enthaltendes Gas das gleiche, wie es zur Zündung der Flamme im Reaktionsraum verwendet wird. Die Gesamtmenge an Sauerstoff wird so gewählt, dass sie über alle Einbauten betrachtet mindestens zur vollständigen Umsetzung des Brenngases und der Metallverbindungen ausreicht. Weiterhin können auch inerte Gase wie Stickstoff oder reaktive Dämpfe wie Wasserdampf über einen Schlitz eines Einbaus zugeführt werden.

Bei dem erfindungsgemäßen Verfahren wird die Lösung in Form eines Aerosoles in den Reaktionsraum eingebracht. Die feinen Tröpfchen des Aerosoles weisen bevorzugt eine mittlere Tröpfchengröße 1 - 120 µm, besonders bevorzugt von 30 - 100 µm auf. Zur Erzeugung der Tröpfchen werden üblicherweise Ein- oder Mehrdüsen eingesetzt. Um die Löslichkeit der Metallverbindungen zu erhöhen und um eine geeignete Viskosität für das Zerstäuben der Lösung zu erzielen, kann die Lösung erwärmt werden.

Als Lösungsmittel kommen aus Wasser, Alkane, Alkancarbonsäuren und/oder Alkohole in Frage. Vorzugsweise werden wässerige Lösungen eingesetzt, wobei unter einer wässerige Lösung eine Lösung zu verstehen ist, bei der Wasser der Hauptbestandteil eines Lösungsmittelgemisches ist oder bei der allein Wasser das Lösungsmittel ist. Die Konzentration der eingesetzten Lösungen ist nicht besonders limitiert. Liegt nur eine Lösung vor, die alle Mischoxidkomponenten enthält, beträgt die Konzentration in der Regel 1 bis 50 Gew.-%, bevorzugt 3 bis 30 Gew-%, ganz besonders bevorzugt 5 - 20 Gew.%, jeweils bezogen auf die Summe der Oxide.

Bei den Metallverbindungen kann es sich um anorganische Metallverbindungen, wie Nitrate, Chloride, Bromide, oder organische Metallverbindungen, wie Alkoxide oder Carboxylate handeln. Als Alkoxide können bevorzugt Ethylate, n-Propylate, iso-Propylate, n-Butylate und/oder tert.-Butylate eingesetzt werden. Als Carboxylate können die der Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure und/oder Laurinsäure zugrundeliegenden Verbindungen eingesetzt werden.

Bevorzugt wird die Metallkomponente aus der Gruppe bestehend aus Ag, Al, Au, B, Ba, Ca, Cd, Ce, Co, Cr, Cu, Dy, Fe, Ga, Ge, Hf, In, La, Li, Mg, Mn, Mo, Nb, Ni, Pd, Rh, Ru, Sc, Si, Sm, Sn, Sr, Ta, Ti, V, Y, Yb und Zn ausgewählt. Silicium und Bor sollen im Rahmen der Erfindung als Metalle betrachtet werden.

In einer besonderen Ausführungsform enthält die Lösung als Metall der Metallverbindung Zn, Ti oder Ca.

In einer weiteren besonderen Ausführungsform enthält diese Lösung als Metall der Metallverbindung Li, La und Zr. Neben diesen kann die Lösung weiterhin Al, Au, Ba, Ca, Ce, Dy, Ga, Ge, Hf, Mg, La, Nb, Sc, Si, Sm, Sn, Sr, Ta, Ti, V, Yb oder Zn enthalten.

In einer weiteren besonderen Ausführungsform enthält die Lösung als Metall der Metallverbindung Li und Ni. Neben diesen kann die Lösung weiterhin Co und Mn enthalten.

Aufgrund der rotierenden Flamme verlängert sich die mittlere Verweilzeit der Partikel in der Flamme. Die Flamme selbst wird durch die Rotationsbewegung schmäler, dafür aber auch wesentlich länger im Vergleich zu einer Flamme die in einen Reaktionsraum ohne Einbauten brennt. Das erfindungsgemäße Verfahren wird bevorzugt so ausgeführt, dass das über einen Schlitz eines Einbaus zugeführte Gas die mittlere Verweilzeit des Reaktionsgemisches im Reaktionsraum gegenüber einem Reaktionsraum, der keine dieser Einbauten aufweist, um wenigstens um den Faktor 1,2, besonders bevorzugt 1,2 -5, verlängert.

Ebenso ist es möglich die Rotation der Flamme durch die Gaseintrittsgeschwindigkeit aus einem Schlitz eines Einbaus in den Reaktionsraum zu beeinflussen. Bevorzugt beträgt die Gaseintrittsgeschwindigkeit wenigstens 10 Nm/s, besonders bevorzugt 10 - 50 Nm/s.

### Beispiele

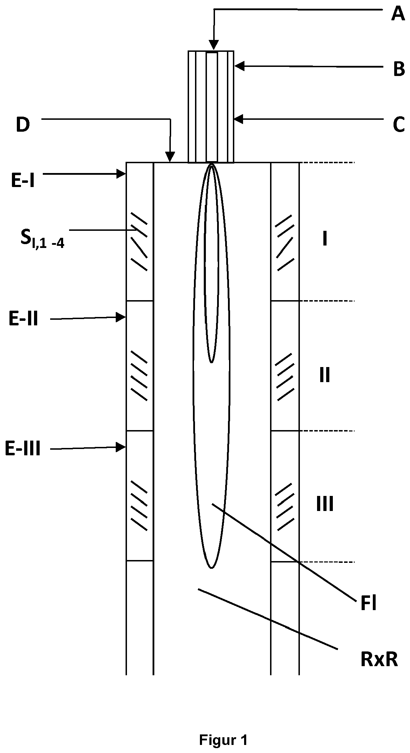

Bei den Vergleichsbeispielen weist der zylinderförmige Reaktionsraum keine Einbauten auf. Figur 1A zeigt schematisch die Einsatzstoffe und deren Einspeisungsort für die Vergleichsbeispiele.

Bei den erfindungsgemäßen Beispielen weist der Reaktionsraum 3 aufeinanderfolgende, rohrförmige Einbauten, Einbau I -III, von je 50 cm Länge auf. Diese sind im Reaktionsraum befestigt. Die Einbauten weisen 4 Schlitze mit einer Länge von 10 cm und einer Breite von 0,15 cm auf. Die Anordnung der Schlitze ist wie in Figur 2 und Figur 3 dargestellt, mit α = 33° und β = 45°. Das Verhältnis Schlitzlänge/Schlitzbreite ist 67:1.

Figur 1B zeigt schematisch die Einsatzstoffe und deren Einspeisungsort für die erfindungsgemäßen Beispiele.

Das Verhältnis vom Durchmesser des Reaktionsraumes zur Gesamtschlitzfläche beträgt 31,4:1.

### Beispiel 1.1 (Vergleich)

### Eingesetzte Lösung:

Calciumoctoatlösung, Octa-Soligen Calcium 10, eine Mischung von Calciumsalzen von C6-C19-Fettsäuren und Naphtha (Erdöl), OMG Borchers, enthaltend 10 Gew.-% Calcium.

2,5 kg/h der Lösung werden mit 3,5 Nm3/h Zerstäuberluft mittels einer Zweistoffdüse in den rohrförmigen Reaktionsraum zerstäubt.

Der Reaktionsraum weist keine Einbauten auf.

Die Flamme wird gebildet durch die Reaktion von 5 Nm³/h Wasserstoff, 13 Nm³/h Primärluft und 15 Nm³/h Sekundärluft. Weitere Reaktionsparameter sind in der Tabelle wiedergegeben.

Das erhaltene Pulver weist eine BET-Oberfläche nach DIN ISO 9277 von 20 m²/g auf.

### Beispiel 1.2 (gemäß Erfindung)

Analog Beispiel 1, jedoch werden via Einbau I 15 Nm³/h Luft in den Reaktionsraum eingebracht. Das erhaltene Pulver weist eine BET-Oberfläche von 38 m²/g auf.

### Beispiel 2.1 (Vergleich)

Zinkoctoatlösung, Octa-Soligen Zink 29, eine Mischung von Zinksalzen von C6-C19-Fettsäuren und Naphtha (Erdöl), TIB, enthaltend 29 Gew.-% Zink.

1,5 kg/h der Lösung mittels Zerstäuberluft (4 Nm³/h) mittels einer Zweistoffdüse in den rohrförmigen Reaktionsraum zerstäubt. Der Reaktionsraum weist keine Einbauten auf.

Die Flamme wird gebildet durch die Reaktion von 5 Nm³/h Wasserstoff und 24 Nm³/h Primärluft. Weitere Reaktionsparameter sind in der Tabelle wiedergegeben.

Das erhaltene Pulver weist eine BET-Oberfläche nach DIN ISO 9277 von 11 m²/g auf.

### Beispiel 2.2 (gemäß Erfindung)

Analog Beispiel 1, jedoch werden via
Einbau I 20 Nm³/h Luft und 1 Nm³/h Wasserdampf
Einbau II 10 Nm³/h Luft und 1 Nm³/h Wasserdampf und
Einbau III 10 Nm³/h Luft
in den Reaktionsraum eingebracht.

Das erhaltene Pulver weist eine BET-Oberfläche von 70 m²/g auf.

### Beispiel 3.1 (Vergleich)

Eingesetzte Lösung: 5,21 Gew.-% Lithiumnitrat, 15,66 Gew.-% Lanthannitrat, 10,35 Gew.-% Zirkonnitrat, Gew.-% Aluminiumnitrat, Rest Wasser. Die Konzentration bezogen auf das Oxid Li_{6,27}La₃Zr₂Al_{0,24}O_{12b} beträgt 10,26 Gew.-%.

8 kg/h der Lösung werden mit einem Zerstäubergas bestehend aus 15 Nm³/h Luft und 0,05 kg Ammoniakgas/Nm³ Luft mittels einer Zweistoffdüse in den rohrförmigen Reaktionsraum zerstäubt. Der Reaktionsraum weist keine Einbauten auf.

Die Flamme wird gebildet durch die Reaktion von 13 Nm³/h Wasserstoff, 75 Nm³/h Primärluft und 25 Nm³/h Sekundärluft. Weitere Reaktionsparameter sind in der Tabelle wiedergegeben.

Das Mischoxidpulver weist eine Zusammensetzung Li_{6,27}La₃Zr₂Al_{0,24}O₁₂ auf. Die BET-Oberfläche beträgt 5 m²/g.

### Beispiel 3.2 (gemäß Erfindung)

Analog Beispiel 5, jedoch werden via Einbau I und Einbau II je 3 Nm³/h Wasserstoff in den Reaktionsraum eingebracht.

Das Mischoxidpulver weist eine Zusammensetzung Li_{6,27}La₃Zr₂Al_{0,24}O₁₂ auf. Die BET-Oberfläche beträgt < 1 m²/g.

### Beispiel 3.3 (gemäß Erfindung)

Analog Beispiel 5, jedoch werden via Einbau II 20 Nm³/h Luft und via Einbau III 30 Nm³/h Luft in den Reaktionsraum eingebracht.

Das Mischoxidpulver weist eine Zusammensetzung Li_{6,27}La₃Zr₂Al_{0,24}O₁₂ auf. Die BET-Oberfläche beträgt 20 m²/g.

### Beispiel 4.1 (Vergleich)

Eingesetzte Lösung bestehend aus 13,3 Gew.-% Lithiumnitrat, 3,8 Gew.-% Nickel(II)nitrat, 15,6 Gew.-% Mangan(II)nitrat, 3,7 Gew.-% Cobalt(II)nitrat und 0,05 Gew.-% Borsäure, Rest Wasser. Summe Metall ist 8,6 Gew.-%.

10 kg/h der Lösung werden mit einem Zerstäubergas bestehend aus 15 Nm³/h Luft und 1,5 kg Ammoniakgas/Nm³ Luft mittels einer Zweistoffdüse in den rohrförmigen Reaktionsraum zerstäubt. Der Reaktionsraum weist keine Einbauten auf.

Die Flamme wird gebildet durch die Reaktion von 13,9 Nm³/h Wasserstoff und 45 Nm³/h Primärluft. Weitere Reaktionsparameter sind in der Tabelle wiedergegeben.

Das Mischoxidpulver weist die Zusammensetzung Li_{1,2}(Ni_{0,13}Co_{0,125}Mn_{0,54}B_{0,05})O₂ auf. Die BET-Oberfläche beträgt 14 m²/g, der Kristallitdurchmesser d_{XRD} = 750 nm.

### Beispiel 4.2 (gemäß Erfindung)

Analog Beispiel 7, jedoch werden via Einbau I 40 Nm³/h Luft und via Einbau II 10 Nm³/h Luft in den Reaktionsraum eingebracht.

Das Mischoxidpulver weist die Zusammensetzung Li_{1,2}(Ni_{0,13}Co_{0,125}Mn_{0,54}B_{0,05})O₂ auf. Die BET-Oberfläche beträgt 5 m²/g, der Kristallitdurchmesser d_{XRD} = 5500 nm.

Die Beispiele 1 und 2 zeigen, wie die BET-Oberfläche eines Metalloxidpulvers mittels des erfindungsgemäßen Verfahrens im Vergleich zu einem Verfahren, welches keine Einbauten im Reaktionsraum aufweist, erhöht werden kann.

Die Beispiele 3 zeigen, dass die BET-Oberfläche eines Metalloxidpulvers mittels des erfindungsgemäßen Verfahrens sowohl erniedrigt (Beispiel 3.2) als auch erhöht werden kann (Beispiel 3.3), jeweils im Vergleich zu einem Verfahren, welches keine Einbauten im Reaktionsraum aufweist. Das Metalloxidpulver aus Beispiel 3.2 weist zudem eine hohe Kristallinität auf.

Die Beispiele 4 zeigen, wie die Kristallinität eines Metalloxidpulvers mittels des erfindungsgemäßen Verfahrens im Vergleich zu einem Verfahren, welches keine Einbauten im Reaktionsraum aufweist, erhöht werden kann.

Erläuterungen zur Tabelle:
v = Gasgeschwindigkeit in den Einbauten I - III;
vₑᵢₙ = Gasgeschwindigkeit der in die Einbauten I - III eingebrachten Gase oder Dämpfe;
t = mittlere Verweilzeit in Einbau I- III;
t^{ttl} = mittlere Verweilzeit über die Einbauten I - III;
v^{ttl} = mittlere Gasgeschwindigkeit über die Einbauten I - III;
   a) Zerstäubergas enthält NH₃;
   b) N₂ anstelle von Luft in Beispiel 3.3;
   c) Nm/s = aus dem Normvolumen und Querschnitt berechnete normierte Geschwindigkeit;
   d) T_{Flamme} = Flammentemperatur; gemessen 10 cm unterhalb des Punktes der Einspeisung von Aerosol, H₂ und Luft in den Reaktionsraum;
   e) T_{Flamme}^{(I)-(III)} = Flammentemperatur; gemessen 10 cm unterhalb des Einbaus;

**Tabelle: Einsatzstoffe und Reaktionsbedingungen**

| **Beispiel** | | **1.1** | **1.2** | **2.1** | **2.2** | **3.1** | **3.2** | **3.3** | **4.1** | **4.2** |
|---|---|---|---|---|---|---|---|---|---|---|
| ṁ_{Lösung} | kg/h | 2,5 | 2,5 | 1,5 | 1,5 | 8 | 8 | 8 | 10 | 10 |
| c_{Metall} | Gew% | 7 | 7 | 16 | 16 | 10,17 | 10,17 | 10,17 | 8,6 | 8,6 |
| V̇_{Zerstäuberluft} | Nm³/h | 3,5 | 3,5 | 4 | 4 | 15^{a)} | 15^{a)} | 15^{a) b)} | 15^{a)} | 15^{a)} |
| V̇_{Primärluft} | Nm³/h | 13 | 13 | 24 | 24 | 75 | 75 | 75 | 45 | 5 |
| V̇_{Sekundärluft} | Nm³/h | 15 | 15 | - | - | 25 | 25 | 25 | - | - |
| V̇_{Wasserstoff} | Nm³/h | 5 | 5 | 1,8 | 1,8 | 13 | 13 | 13 | 13,9 | 13,9 |
| T_{Flamme}^{d)} | °C | 788 | 788 | 1244 | 1244 | 517 | 517 | 515 | 789 | 979 |

| **Einbau I** | | | | | | | | | | |
|---|---|---|---|---|---|---|---|---|---|---|
| V̇_{Wasserstoff}^{(I)} | Nm³/h | - | - | - | - | - | 3 | - | - | - |
| V̇_{Luft}^{(I)} | Nm³/h | - | 15 | - | 20 | - | - | - | - | 40 |
| V̇_{Wasserdampf}^{(I)} | kg/h | - | - | - | 1 | - | - | - | - | - |
| Vₑᵢₙ^{(I)} | Nm/s | - | 17,6 | - | 19,4 | | 10,2 | - | - | 15,4 |
| v^{(I)} | Nm/s | 1,40 | 1,84 | 1,65 | 2,55 | 3,34 | 4,56 | 3,34 | 2,83 | 3,24 |
| t^{(I)} | ms | 357 | 1.360 | 303 | 980 | 150 | 550 | 150 | 177 | 772 |
| T_{Flamme}^{(I)e)} | °C | 751 | 686 | 1023 | 643 | 498 | 681 | 498 | 723 | 983 |

| **Einbau II** | | | | | | | | | | |
|---|---|---|---|---|---|---|---|---|---|---|
| V̇_{Luft}^{(II)} | Nm³/h | - | - | - | 10 | - | - | 30 | - | 10 |
| V̇_{Wasserdampf}^{(II)} | kg/h | - | - | - | 1 | - | - | - | - | - |
| Vₑᵢₙ^{(II)} | Nm/s^{c)} | - | - | - | 14,1 | - | - | 27,8 | - | - |
| v^{(II)} | Nm/s | 1,15 | 1,75 | 1,47 | 2,89 | 2,49 | 4,83 | 3,86 | 2,17 | 2,61 |
| t^{(II)} | ms | 435 | 286 | 340 | 865 | 2,01 | 104 | 650 | 230 | 958 |
| T_{Flamme}^{(II)e)} | °C | 723 | 657 | 917 | 491 | 463 | 719 | 372 | 697 | 927 |

| **Einbau III** | | | | | | | | | | |
|---|---|---|---|---|---|---|---|---|---|---|
| V̇_{Wasserstoff}^{(III)} | Nm³/h | - | - | - | - | - | 3 | - | - | - |
| V̇_{Luft}^{(III)} | Nm³/h | - | - | - | 10 | - | - | 20 | - | - |
| vₑᵢₙ^{(III)} | Nm/s | - | - | - | 12,4 | - | 10,2 | 18,5 | - | - |
| v^{(III)} | Nm/s | 0,94 | 1,63 | 1,33 | 3,34 | 2,03 | 5,62 | 4,02 | 2,03 | 2,26 |
| t^{(III)} | ms | 532 | 307 | 376 | 750 | 2,46 | 445 | 620 | 246 | 221 |
| T_{Flamme}^{(III)e)} | °C | 710 | 611 | 821 | 383 | 426 | 839 | 302 | 681 | 871 |

| **Summe Einbauten I** - **III** | | | | | | | | | | |
|---|---|---|---|---|---|---|---|---|---|---|
| v^{(ttl)} | Nm/s | 1,13 | 1,73 | 1,47 | 2,89 | 2,51 | 4,95 | 3,71 | 2,34 | 2,70 |
| t^{(ttl)} | ms | 1324 | 1953 | 1019 | 2595 | 597 | 699 | 1420 | 653 | 1951 |

## Patentansprüche

1. Verfahren zur Herstellung eines Metalloxidpulvers mittels Flammenspraypyrolyse bei dem man
a) einen Strom einer Lösung, welche wenigstens eine oxidierbare oder hydrolysierbare Metallverbindung enthält, mittels eines Zerstäubergases zu einem Aerosol zerstäubt,
b) dieses Aerosol im Reaktionsraum eines Reaktors mit einer Flamme, die durch Zündung eines Gemisches von Brenngas und Luft erhalten wird, zur Reaktion bringt,
c) den Reaktionsstrom kühlt und
d) anschließend das feste Produkt aus dem Reaktionsstrom abtrennt, wobei
e) der Reaktionsraum ein oder mehrere aufeinanderfolgende, doppelwandige Einbauten aufweist, wobei die dem flammenführenden Bereich des Reaktionsraumes zugewandte Wandung des doppelwandigen Einbaus wenigstens einen Schlitz aufweist, durch den man ein Gas oder Dampf in den Reaktionsraum, in dem die Flamme brennt, einbringt, und
f) der Schlitz so angeordnet ist, dass dieses Gas oder Dampf eine Rotation der Flamme bewirkt.

2. Verfahren nach Anspruch 1, **dadurch gekennzeichnet, dass**
der Einbau wenigstens zwei, bevorzugt 4, Schlitze aufweist.

3. Verfahren nach den Ansprüchen 1 oder 2, **dadurch gekennzeichnet, dass**
das Verhältnis Schlitzlänge/Schlitzbreite 10:1 - 200:1 ist.

4. Verfahren nach den Ansprüchen 1 bis 3, **dadurch gekennzeichnet, dass**
das Verhältnis Durchmesser Reaktionsraum/Gesamtschlitzfläche 15:1 - 200:1 ist.

5. Verfahren nach den Ansprüchen 1 bis 4, **dadurch gekennzeichnet, dass**
betrachtet im Längsschnitt eines Einbaues, der Winkel a, den ein Schlitz zur Senkrechten einnimmt 15° ≤ α ≤ 60° ist.

6. Verfahren nach den Ansprüchen 1 bis 5, **dadurch gekennzeichnet, dass** der Winkel ß, der den Winkel zwischen der Schnittachse des Schlitzes zum Kreislot des Mittelpunktes beschreibt, bevorzugt 30° ≤ β ≤ 60° und besonders bevorzugt 40° ≤ β ≤ 50° beträgt.

7. Verfahren nach den Ansprüchen 1 bis 7, **dadurch gekennzeichnet, dass**
das Gas ein Brenngas ist.

8. Verfahren nach den Ansprüchen 1 bis 7, **dadurch gekennzeichnet, dass**
das Gas ein sauerstoffenthaltendes Gas ist.

9. Verfahren nach den Ansprüchen 1 bis 8, **dadurch gekennzeichnet, dass**
die Metallkomponente der Metallverbindung aus der Gruppe bestehend aus Ag, Al, Au, B, Ba, Ca, Cd, Ce, Co, Cr, Cu, Dy, Fe, Ga, Ge, Hf, In, La, Li, Mg, Mn, Mo, Nb, Ni, Pd, Rh, Ru, Sc, Si, Sm, Sn, Sr, Ta, Ti, V, Y, Yb und Zn ausgewählt ist.

10. Verfahren nach den Ansprüchen 1 bis 9, **dadurch gekennzeichnet, dass**
die Lösung als Metall der Metallverbindung Zink, Titan oder Calcium enthält.

11. Verfahren nach den Ansprüchen 1 bis 9, **dadurch gekennzeichnet, dass**
die Lösung als Metall der Metallverbindung Li, La und Zr enthält.

12. Verfahren nach den Ansprüchen 1 bis 9, **dadurch gekennzeichnet, dass**
die Lösung als Metall der Metallverbindung Li und Ni enthält.

13. Verfahren nach den Ansprüchen 1 bis 12, **dadurch gekennzeichnet, dass**
das über einen Schlitz eines Einbaus zugeführte Gas die mittlere Verweilzeit des Reaktionsgemisches im Reaktionsraum gegenüber einem Reaktionsraum, der keine dieser Einbauten aufweist, um wenigstens um den Faktor 1,2 verlängert.

14. Verfahren nach den Ansprüchen 1 bis 13, **dadurch gekennzeichnet, dass**
die Gaseintrittsgeschwindigkeit aus einem Schlitz eines Einbaus in den Reaktionsraum wenigstens 10 Nm/s beträgt.

## Claims

1. Process for producing a metal oxide powder by flame spray pyrolysis where
a) a stream of a solution containing at least one oxidizable or hydrolysable metal compound is atomized to afford an aerosol by means of an atomizer gas,
b) this aerosol is brought to reaction in the reaction space of a reactor with a flame obtained by ignition of a mixture of fuel gas and air,
c) the reaction stream is cooled and
d) the solid product is subsequently removed from the reaction stream, wherein
e) the reaction space comprises one or more successive double-walled internals, wherein the wall of the double-walled internal facing the flame-conducting region of the reaction space comprises at least one slot through which a gas or vapour is introduced into the reaction space in which the flame is burning and
f) the slot is arranged such that this gas or vapour brings about a rotation of the flame.

2. Process according to Claim 1, **characterized in that** the internal comprises at least two, preferably 4, slots.

3. Process according to Claim 1 or 2, **characterized in that**
the slot length/slot width ratio is 10:1 - 200:1.

4. Process according to Claims 1 to 3, **characterized in that**
the reaction space diameter/total slot area ratio is 15:1 - 200:1.

5. Process according to Claims 1 to 4, **characterized in that**
viewed in longitudinal section of an internal the angle α of a slot to the vertical is 15° ≤ α ≤ 60°.

6. Process according to Claims 1 to 5, **characterized in that** the angle β which describes the angle between the section axis of the slot to the circle perpendicular of the centre is preferably 30° < β < 60° and particularly preferably 40° ≤ β ≤ 50°.

7. Process according to Claims 1 to 7, **characterized in that**
the gas is a fuel gas.

8. Process according to Claims 1 to 7, **characterized in that**
the gas is an oxygen-containing gas.

9. Process according to Claims 1 to 8, **characterized in that**
the metal component of the metal compound is selected from the group consisting of Ag, Al, Au, B, Ba, Ca, Cd, Ce, Co, Cr, Cu, Dy, Fe, Ga, Ge, Hf, In, La, Li, Mg, Mn, Mo, Nb, Ni, Pd, Rh, Ru, Sc, Si, Sm, Sn, Sr, Ta, Ti, V, Y, Yb and Zn.

10. Process according to Claims 1 to 9, **characterized in that**
the solution contains zinc, titanium or calcium as the metal of the metal compound.

11. Process according to Claims 1 to 9, **characterized in that**
the solution contains Li, La and Zr as the metal of the metal compound.

12. Process according to Claims 1 to 9, **characterized in that**
the solution contains Li and Ni as the metal of the metal compound.

13. Process according to Claims 1 to 12, **characterized in that**
the gas supplied via a slot in an internal lengthens the average residence time of the reaction mixture in the reaction space by at least a factor of 1.2 compared to a reaction space comprising none of these internals.

14. Process according to Claims 1 to 13, **characterized in that**
the gas entry velocity from a slot of an internal into the reaction space is at least 10 Nm/s.

## Revendications

1. Procédé pour la préparation d'une poudre d'oxyde métallique au moyen d'une pyrolyse par pulvérisation à la flamme dans lequel
a) on pulvérise en un aérosol un flux d'une solution qui contient au moins un composé métallique oxydable ou hydrolysable au moyen d'un gaz de pulvérisation,
b) on met en réaction cet aérosol dans un espace de réaction d'un réacteur doté d'une flamme, qui est obtenue par ignition d'un mélange de gaz combustible et d'air,
c) on refroidit le flux de réaction et
d) on sépare ensuite le produit solide du flux de réaction,
e) l'espace de réaction présentant un ou plusieurs éléments encastrés consécutifs, à double paroi, la paroi de l'élément encastré à double paroi orientée vers la zone conduisant la flamme de l'espace de réaction présentant au moins une fente par laquelle on introduit un gaz ou de la vapeur dans l'espace de réaction dans lequel la flamme brûle, et
f) la fente étant disposée de telle façon que ce gaz ou cette vapeur a pour effet une rotation de la flamme.

2. Procédé selon la revendication 1, **caractérisé en ce que** l'élément encastré présente au moins deux, préférablement 4, fentes.

3. Procédé selon la revendication 1 ou 2, **caractérisé en ce que** le rapport longueur de fente/largeur de fente est de 10:1 à 200:1.

4. Procédé selon les revendications 1 à 3, **caractérisé en ce que** le rapport diamètre de l'espace de réaction/surface totale de la fente est de 15:1 à 200:1.

5. Procédé selon les revendications 1 à 4, **caractérisé en ce que**, considéré dans la section longitudinale d'un élément encastré, l'angle α que prend une fente par rapport à la verticale est de 15° ≤ α ≤ 60°.

6. Procédé selon les revendications 1 à 5, **caractérisé en ce que** l'angle β qui décrit l'angle entre l'axe d'intersection de la fente par rapport à la soudure circulaire du point central, est préférablement de 30° ≤ β ≤ 60° et particulièrement préférablement de 40° ≤ β ≤ 50°.

7. Procédé selon les revendications 1 à 7, **caractérisé en ce que** le gaz est un gaz combustible.

8. Procédé selon les revendications 1 à 7, **caractérisé en ce que** le gaz est un gaz contenant de l'oxygène.

9. Procédé selon les revendications 1 à 8, **caractérisé en ce que** le composant métallique du composé métallique est choisi dans le groupe constitué par Ag, Al, Au, B, Ba, Ca, Cd, Ce, Co, Cr, Cu, Dy, Fe, Ga, Ge, Hf, In, La, Li, Mg, Mn, Mo, Nb, Ni, Pd, Rh, Ru, Sc, Si, Sm, Sn, Sr, Ta, Ti, V, Y, Yb et Zn.

10. Procédé selon les revendications 1 à 9, **caractérisé en ce que** la solution contient, en tant que métal du composé métallique, du zinc, du titane ou du calcium.

11. Procédé selon les revendications 1 à 9, **caractérisé en ce que** la solution contient, en tant que métal du composé métallique, Li, La et Zr.

12. Procédé selon les revendications 1 à 9, **caractérisé en ce que** la solution contient, en tant que métal du composé métallique, Li et Ni.

13. Procédé selon les revendications 1 à 12, **caractérisé en ce que** le gaz introduit par l'intermédiaire d'une fente d'un élément encastré rallonge le temps de séjour moyen du mélange de réaction dans l'espace de réaction par rapport à un espace de réaction qui ne présente aucun de ces éléments encastrés, d'au moins un facteur 1,2.

14. Procédé selon les revendications 1 à 13, **caractérisé en ce que** la vitesse d'entrée de gaz par une fente d'un élément encastré dans l'espace de réaction est d'au moins 10 Nm/s.
